# EUROPÄISCHE PATENTSCHRIFT

(11) **EP 0 585 805 B1**
(45) Veröffentlichungstag und Bekanntmachung des Hinweises auf die Patenterteilung: **12.05.1999**
(21) Anmeldenummer: 93113624.6
(22) Anmeldetag: 26.08.1993
(51) Int. Cl.: H04N 7/14

(54) **Vorrichtung zur Übertragung von Videosignalen und Audiosignalen über ein diensteintegrierendes Nachrichtennetz**
Video and audio signal transmission apparatus for integrated services communication network
Appareil de transmission de signaux vidéo et audio pour un réseau de communication à integration de services

(30) Priorität: 01.09.1992 DE 4229151
(43) Veröffentlichungstag der Anmeldung: 09.03.1994
(73) Patentinhaber: ALCATEL, 75008 Paris (FR)
(72) Erfinder: Bergler, Frank, D-75223 Niefern (DE)
(74) Vertreter: Knecht, Ulrich Karl, Dipl.-Ing.

(56) Entgegenhaltungen:
- NTZ NACHRICHTENTECHNISCHE ZEITSCHRIFT Bd. 44, Nr. 6, Juni 1991, BERLIN DE Seiten 394 - 400 , XP240836 A.E. BLITZ 'DER PC ALS ENDGER[T F]R DIE VIDEOKOMMUNIKATION'
- ANT NACHRICHTENTECHNISCHE BERICHTE Bd. 1, Mai 1984, BACKNANG, DE Seiten 13 - 20 W. SCHMIDT 'DAS REALISIERTE BIGFON-SYSTEM'
- NACHRICHTEN ELEKTRONIK UND TELEMATIK Bd. 45, Nr. 5, Mai 1991, HEIDELBERG DE Seiten 211 - 213 , XP230084 W. FROHBERG 'OBJEKT IM NETZ'
- FUNKSCHAU Bd. 63, Nr. 12, 31. Mai 1991, MUNCHEN DE Seiten 28 - 32 , XP231535 G. SCHAAS 'EINE SYMBIOSE GEWINNT KONTUREN'
- NACHRICHTENTECHNISCHE BERICHTE Nr. 1, Mai 1984, BACKNANG DE Seiten 39 - 45 , XP308679 R. ARNOLD 'CODIERUNG DER TONRUNDFUNK- UND FARBFERNSEHSIGNALE'
- ICC 91 INTERNATIONAL CONFERENCE ON COMMUNICATIONS Bd. 1, Juni 1991, DENVER Seiten 73 - 77 , XP269382 F. SAMMARTINO 'DESKTOP MULTIMEDIA COMMUNICATIONS - BREAKING THE CHAINS'

## Beschreibung

Die Erfindung betrifft einen Terminaladapter zur Übertragung von Audio/Videosignalen über ein diensteintegrierendes Nachrichtennetz, bestehend aus
- einer Netzbuchse zum Anschluß eines diensteintegrierenden Nachrichtennetzes zum Empfang und zur Sendung der ISDN-Signale,
- einer ersten Gerätebuchse zum Anschluß eines Bild- und Tonaufnahmegerätes zum Empfang der Audio/Videosignale des Bild- und Tonaufnahmegerätes, und
- einer zweiten Gerätebuchse zum Anschluß eines Bild- und Tonwiedergabegerätes zur Sendung der Audio/Videosignale zum Bild- und Tonwiedergabegerät, und
- einem sich zwischen der Netzbuchse und den Gerätebuchsen befindenden Konverter, mit einer ersten Seite die an der Netzbuchse angeschlossen ist, und mit einer zweiten Seite die an den Gerätebuchsen angeschlossen ist, zur Umwandlung der ISDN-Signale in Audio/Videosignale und vice versa.

Dieser Terminaladapter ist bekannt aus NTZ Nachrichtentechnische Zeitschrift, Bd. 44, Nr. 6, Juni 91, Berlin, DE, A.E. Blitz: 'Der PC ...', in dem der Konverter ein PC ist.

Die Erfindung liegt die Aufgabe zugrunde einen Terminaladapter zu entwickeln welcher an übliche Bild- und Tonaufnamegeräte und übliche Bild- und Tonwiedergabegeräte angeschlossen werden kann.

Der Terminaladapter ist dadurch gekennzeichnet, daß der Konverter besteht aus mindestens
- einem mit der Netzbuchse gekoppelten ersten Modul zum Zugriff auf das diensteintegrierende Nachrichtennetz,
- einem daran angeschlossenen zweiten Modul für ISDN-B-Kanal- und ISDN-D-Kanalprotokolle, zur Festlegung standardisierter Prozeduren,
- einem darauf zugreifenden und abgreifenden Bus,
- einem mit dem Bus verbundenen Mittel zur Verdichtung oder Kompression von zu übertragenden blockweisen Signaldaten,
- einem mit dem Mittel und mit den Gerätebuchsen verbundenen Videomodul zur Verarbeitung der Videosignale, und
- einem mit dem Bus und mit den Gerätebuchsen verbundenen Audiomodul zur Verarbeitung der Audiosignale.

Anstelle, daß eine volständig neue Übertragungseinheit eingesetzt wird, können die im fast jedem Haushalt vorhandene Bild- und Tonaufnamegeräte und Bild- und Tonwiedergabegeräte um einen zusätzlichen Terminaladapter ergäntzt werden, werden dann an ein Nachrichtennetz angeschlossen und sind somit der Lage Video- und Audiosignale zu übertragen. Somit stellt der erfindungsgemäße Lösung der Aufgabe einen sehr kostengünstigen Weg der Übertragung dar.

Ein weiterer Vorteil der Erfindung liegt, sollte die ganze Vorrichtung als Überwachungsanlage verwendet werden, darin, daß ein flexibeler und schneller Einsatz an nahezu jedem Ort zu ermöglichen ist. Eine Überwachungsanlage kann schnell und unkompliziert aufgebaut und in Betrieb genommen werden.

Vorteilhafte Weiterentwicklungen des Terminaladapters der Erfindung sind den Unteransprüchen 2 und 3 zu entnehmen.

Die Erfindung betrifft weiter eine Vorrichtung zur Übertragung von Audio/Videosignalen über ein diensteintegrierendes Nachrichtennetz, bestehend aus mindestens einem Bild- und Tonwiedergabegerät und aus mindestens einem Bild- und Tonaufnahmegerät und aus einem Terminaladapter bestehend aus mindestens
- einer Netzbuchse zum Anschluß eines diensteintegrierenden Nachrichtennetzes zum Empfang und zur Sendung der ISDN-Signale,
- einer ersten Gerätebuchse zum Anschluß eines Bild- und Tonaufnahmegerätes zum Empfang der Audio/Videosignale des Bild- und Tonaufnahmegerätes, und
- einer zweiten Gerätebuchse zum Anschluß eines Bild- und Tonwiedergabegerätes zur Sendung der Audio/Videosignale zum Bild- und Tonwiedergabegerät, und
- einem sich zwischen der Netzbuchse und den Gerätebuchsen befindenden Konverter, mit einer ersten Seite, die an der Netzbuchse angeschlossen ist, und mit einer zweiten Seite, die an den Gerätebuchsen angeschlossen ist, zur Umwandlung der ISDN-Signale in Audio/Videosignale und vice versa.

Die Vorrichtung ist gekennzeichnet, daß der Konverter besteht aus mindestens
- einem mit der Netzbuchse gekoppelten ersten Modul zum Zugriff auf das diensteintegrierende Nachrichtennetz,
- einem daran angeschlossenen zweiten Modul für ISDN-B-Kanal- und ISDN-D-Kanalprotokolle, zur Festlegung standardisierter Prozeduren,
- einem darauf zugreifenden und abgreifenden Bus,
- einem mit dem Bus verbundenen Mittel zur Verdichtung oder Kompression von zu übertragenden blockweisen Signaldaten,
- einem mit dem Mittel und mit den Gerätebuchsen verbundenen Videomodul zur Verarbeitung der Videosignale, und
- einem mit dem Bus und mit den Gerätebuchsen verbundenen Audiomodul zur Verarbeitung der Audiosignale.

Zwei Ausführungsbeispiele und ein möglicher Aufbau des Terminaladapters werden anhand der folgenden Figuren erläutert. Folgende Figuren zeigen:
- Fig. 1: Blockschaltbild der erfindungsgemäßen Vorrichtung,
- Fig. 2: Blockschaltbild eines speziellen Ausführungsbeispiels der erfindungsgemäßen Vorrichtung,
- Fig. 3: Blockschaltbild des erfindungsgemäßen Terminaladapters.

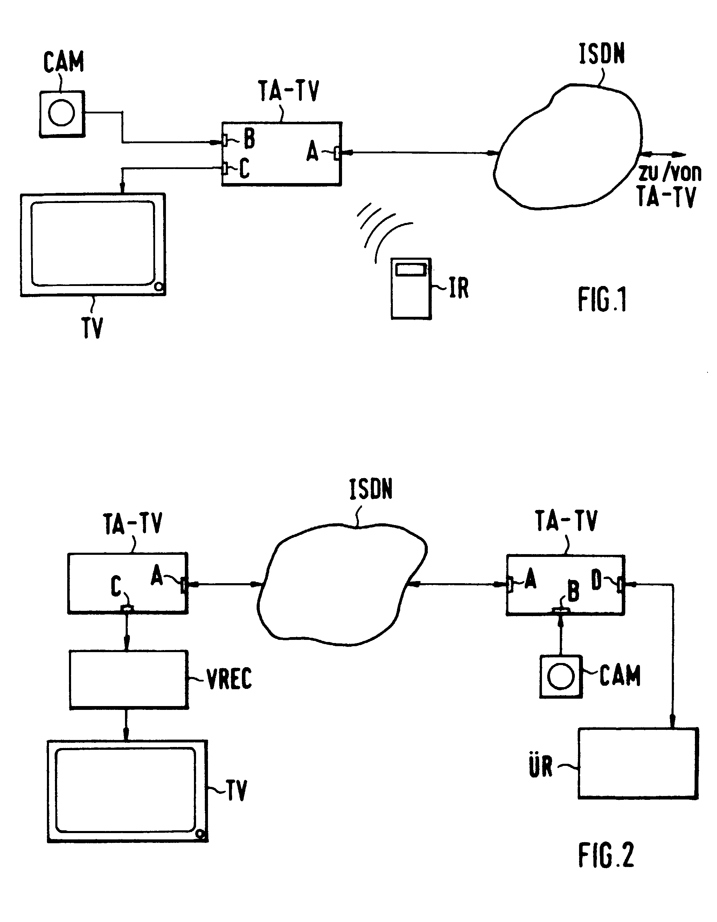

Im folgenden Teil wird die erfindungsgemäße Vorrichtung zur Übertragung von Video- und Audiosignalen anhand von Figur 1 erläutert.

Mindestens ein Bild- und Tonaufnahmegerät CAM ist über eine Leitung und eine erste Gerätebuchse B mit einem Terminaladapter TA-TV verbunden. Weiterhin ist mindestens ein Bild- und Tonwiedergabegerät TV, VREC über eine Leitung und eine zweite Gerätebuchse C mit dem Terminaladapter TA-TV verbunden. Der Terminaladapter ist wiederum über eine Netzbuchse A und eine Leitung mit einem diensteintegrierenden Nachrichtennetz ISDN verbunden. Von dem diensteintegrierenden Nachrichtennetz aus können beliebig viele Verbindungen zu Terminaladaptern TA-TV angeschlossen sein.

Mit Hilfe des Bild- und Tonaufnahmegeräte CAM werden entweder aktuelle Bilder und aktueller Ton, wie z.B. bei einem Camcorder, oder bereits aufgezeichnete Bilder und bereits aufgezeichneter Ton, wie z.B. bei einem Recorder an den Terminaladapter TA-TV weitergegeben. Dort werden die Bilder und der Ton für den Fall, daß eine Teilnehmerwahl, also ein Absetzen einer Teilnehmerrufnummer und ein Verbindungsaufbau über das Nachrichtennetz ISDN zu einem anderen Teilnehmer stattgefunden hat, verarbeitet und zu dem Teilnehmer übertragen, der mit der gleichen Vorrichtung ausgestattet ist. Bei dem Teilnehmer treffen die Bilder und der Ton ein, werden von dem Terminaladapter wiederum verarbeitet und werden über die zweite Gerätebuchse C und eine Leitung an ein Bild- und Tonwiedergabegeräte TV, VREC, z.B. einen Fernsehapparat weitergegeben und dort ausgestrahlt.

Zur Ermöglichung einer Teilnehmerwahl können verschiedene Möglichkeiten in Betracht gezogen werden.

Eine Möglichkeit ist, wie in Unteranspruch 2 beschrieben, ein Mittel zur Verfügung zu stellen, das es ermöglicht eine Teilnehmerwahl über den Terminaladapter vorzunehmen. Dies kann entweder durch eine in den Terminaladapter eingebaute Tastatur oder über eine auf den Terminaladapter wirkende Fernbedienung IR, z.B. eine Infrarot-Fernbedienung, erfolgen. Somit ist auch die Teilnehmerwahl über den Terminaladapter möglich.

Eine weitere Möglichkeit ergibt sich für den Fall, daß die Gerätebuchsen B und C SCART-Anschlüsse sind. Für diesen Fall von kann das Absetzen einer Teilnehmerrufnummer mit Hilfe einer Fernbedienung IR, z.B. einer Infrarot-Fernbedienung die zu dem Bild- und Tonwiedergabegeräte gehört, erfolgen. Für den Fall, daß die Gerätebuchsen B und C Antennenstecker sind gilt die vorher genannte Form der Teilnehmerwahl.

Eine weitere Möglichkeit existiert für den Fall, daß gemäß Unteranspruch 4 zusätzlich eine Schnittstelle, z.B. V.24, an den Terminaladapter TA-TV hinzugefügt wird. Über diese Schnittstelle kann ein Datenverarbeitungsgerät, beispielsweise ein Personal Computer, angeschlossen werden. Über diesen Personal Computer wiederum können sowohl die Teilnehmerwahl als auch die Ausführungen verschiedener Rechenprozeduren durchgeführt werden, z.B. ein Vergleich verschiedener Standbilder. Zusätzlich können in dem Datenverarbeitungsgerät mehrere Rufnummern gespeichert werden.

Weiterhin kann die verwendete Vorrichtung zur Teilnehmerwahl gemäß Unteranspruch 6 zur Einstellung von Sende- und/oder Empfangsparametern verwendet werden. Die Parameter wie Helligkeit, Lautstärke usw. können somit individuell eingestellt werden.

Die Netzbuchse A kann entweder eine S_{O}, eine speziell für kurze Anschlußleitungen konzipierte Schnittstelle, oder eine U_{PO}, eine speziell für Endgeräte an Telekommunikationsanlagen festgelegte Schnittstelle sein. Die bisher aufgeführte Vorrichtung kann für den Fall, daß aktuelle Bilder und aktueller Ton übertragen werden, und für den Fall, daß bei jedem Teilnehmer sowohl Bild- und Tonaufnahmegerät als auch Bild- und Tonwiedergabegeräte angeschlossen sind als eine Art Bildtelefon oder aber als kostengünstiges Videophone einer speziellen Ausführungsform bezeichnet werden.

Im folgenden Teil wird ein spezielles Ausführungsbeispiel anhand von Figur 2 erläutert. Das Ausführungsbeispiel stellt eine Überwachungsanlage dar.

An einen Terminaladapter TA-TV ist ein Bild- und Tonaufnahmegeräte CAM, beispielsweise eine Videokamera, über eine erste Gerätebuchse B und eine Leitung angeschlossen. Die Videokamera dient als Überwachungskamera und nimmt aktuelle Bilder und Ton auf und gibt sie über den Terminaladapter TA-TV an ein diensteintegrierendes Nachrichtennetz ISDN, z.B. ein ISDN-Netz weiter.

Die Bilder und der Ton werden über da ISDN-Netz zu einem weiteren Teilnehmer, beispielsweise einer Wach- und Schließgesellschaft gesendet. Dort werden die eintreffenden Signale wiederum von einem Terminaladapter TA-TV verarbeitet und über eine zweite Gerätebuchse C und eine Leitung an ein Bild- und Tonwiedergabegeräte TV, VREC weitergegeben. Das Bild- und Tonwiedergabegeräte kann beispielsweise eine Videorecorder zur Aufzeichnung mit daran angeschlossenem Fernsehapparat sein. Demnach können die aktuellen Bilder und der entsprechende Ton aufgezeichnet und/oder direkt angesehen werden.

Somit kann für den Fall einer Überwachungsanlage beobachten und abgehört werden, ob sich in einem zu beobachtenden Raum oder Gebäude etwas bewegt, oder ob Töne zu hören sind.

Für einen rechnergesteuerten Einzelbildvergleich muß auf der bild- und tonaufnehmenden Seite zusätzlich ein Überwachungsrecher ÜR über eine Schnittstelle D an den Terminaladapter TA-TV angeschlossen sein. Dem Überwachungsrechner ÜR werden permanent Einzelbilder gesendet. Falls die Videokamera CAM eine fest installierte Kamera ist, müßten dem Überwachungsrechner ÜR ständig gleiche Bilder übertragen werden. Lediglich für den Fall, daß sich beispielsweise ein Eindringling in einem zu überwachenden Raum befindet, erfolgt eine Änderung zwischen aufeinanderfolgenden Bildern. Der Überwachungsrechner bemerkt diese Änderung und kann diese Information weitergeben und somit Alarm auslösen.

Diese Anlage kann man sich aber auch als diejenige Form der Überwachungskamera denken, bei der für den Fall einer Übereinstimmung eines aktuellen Bildes mit einem im Speicher des Überwachungsrechner befindlichen Bildes, eine bestimmte Folgehandlung ausgelöst wird, z.B. die Übereinstimmung eines aktuellen Bildes eines Nummernschildes mit dem Nummernschild eines für beispielsweise eine Garage zugangsberechtigten Wagens, woraufhin sich ein Garagentor öffnet.

Der Anschluß des Überwachungsrechners ÜR an den Terminaladapter kann beispielsweise über eine V.24 Schnittstelle erfolgen.

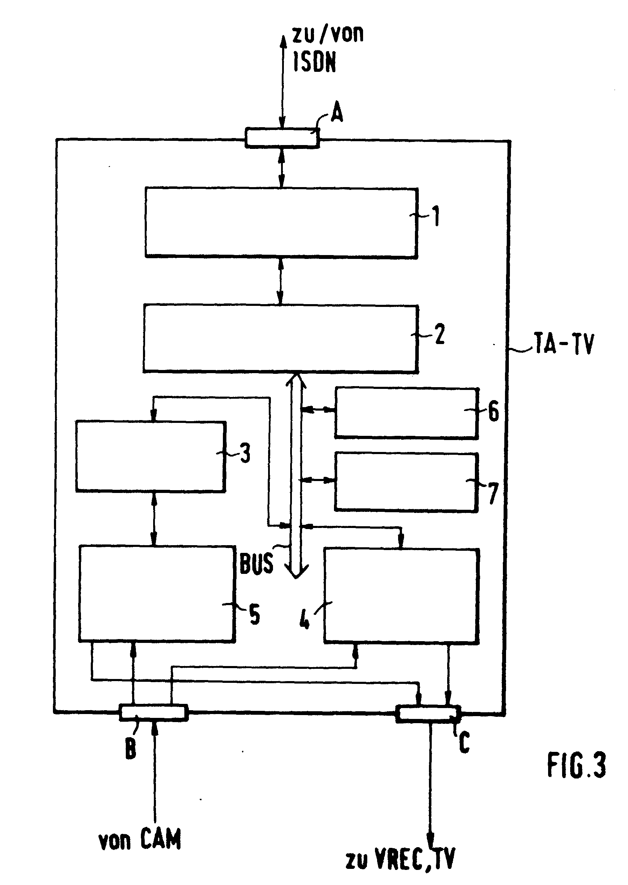

Im folgenden Teil wird der erfindungsgemäße Terminaladapter anhand von Figur 3 näher erläutert.

Ein Terminaladapter TA-TV besteht aus einer Netzbuchse A zur Herstellung einer Steckverbindung zu einem diensteintegrierenden Nachrichtennetz ISDN. Von der Netzbuchse A aus besteht eine Verbindung zu einem ersten Modul 1, welches einen Zugriff auf das Nachrichtennetz ISDN, beispielsweise einem ISDN-Netz ermöglicht. Von dort aus besteht eine weitere Verbindung zu einem zweiten Modul 2 für ISDN-B-Kanal- und ISDN-D-Kanalprotokolle. Mit den ISDN-B-Kanal- und ISDN-D-Kanalprotokollen werden standardisierte Prozeduren für den Informationsaustausch, also für die Signalübertragung, festgelegt.

Das zweite Modul 2 ist mit einem seriellen Bus BUS verbunden.

An den seriellen Bus BUS sind sowohl eine Mikroprozessoreinheit 7, als auch ein optionales Modul 6 angeschlossen. In der Mikroprozessoreinheit befinden sich neben einem Mikroprozessor ebenfalls auch Speicherbausteine, wie RAM's oder ROM's oder EEPROM's, zum Beispiel zur Speicherung von Teilnehmerrufnummern. Die Protokolldaten werden z.B. nach CCITT-Norm mit H.221 verarbeitet. Mittels des optionalen Moduls 6 können Funktionen wie z.B. automatische Teilnehmerwahl, Zugangskontrolle, usw. ausgeführt werden.

Desweiteren ist der serielle Bus BUS mit einem Mittel 3 zur Verdichtung von zu übertragenden blockweisen Signaldaten verbunden.

In dem Mittel 3 werden die zu übertragenden blockweisen Videodaten verdichtet oder komprimiert, also wird mit Hilfe dieses Mittels 3 die Datenmenge reduziert. Ein mögliches Komprimierungsverfahren ist JPEG, oder nch CCITT-Norm H.261.

Neben dem, daß mit dem Mittel 3 Signaldaten komprimiert werden können, können über das Mittel 3 ebenfalls Videosignale in nicht komprimiertem Zustand übertragen werden. Dies wird für den Fall benötigt, daß Standbilder mit hoher Auflösung übertragen werden.

Das Mittel 3 zur Blockverdichtung ist mit einem Videomodul 5 verbunden. In dem Videomodul 5 werden sowohl ankommende als auch abgehende Videosignale verarbeitet und angepaßt. In dem Audiomodul 4 werden ankommende und abgehende Audiosignale verarbeitet und angepaßt.

Sowohl das Audiomodul 4 als auch das Videomodul 5 sind jeweils über eine abgehende Verbindung mit mindestens einer zweiten Gerätebuchse C verbunden. Die zweite Gerätebuchse C dient zum Anschluß eines Bild- und Tonwiedergabegerätes VREC, TV an den Terminaladapter TA-TV.

Sowohl das Audiomodul 4 als auch das Videomodul 5 sind durch eine auftreffende Verbindung mit mindestens einer ersten Gerätebuchse B verbunden. Diese erste Gerätebuchse B dient zum Anschluß eines Bild- und Tonaufnahmegerätes CAM.

Für den dargestellten Fall, daß jeweils ein Bild- und Tonaufnahmegerät CAM und ein Bild- und Tonwiedergabegerät VREC, TV angeschlossen sind und für den Fall, daß Video- und Audiosignale aufgenommen und übertragen werden sollen, finden folgende Abläufe statt. Die Videosignale und auch Tonsignale werden über die erste Gerätebuchse B jeweils an das Videomodul 5 und an das Audiomodul 4 weitergegeben. Diese werden verarbeitet und für die Übertragung angepaßt. Darauf werden die so verarbeiteten Videosignale an das Mittel 3 zur Verdichtung von zu übertragenden blockweisen Signaldaten gegeben. Dort werden die Videosignaldaten verdichtet und mit einem seriellen Bus BUS weitergeleitet. Die Audiosignaldaten werden ebenfalls auf dem Bus BUS gebrcht. Über den Bus BUS werden die Signaldaten an das zweite Modul 2 und dann an das erste Modul 1 weitergegeben und dann über die Netzbuchse A zu dem diensteintegrierten Nachrichtennetz ISDN übertragen.

Im gegenteiligen Fall, daß Video- und Audiosignal von dem diensteintegrierenden Nachrichtennetz ISDN aus übertragen und wiedergegeben werden sollen, findet der genau entgegengesetzte Verlauf statt. Jedoch werden für diesen Fall von dem Audiomodul 4 und dem Videomodul 5 aus die entsprechenden Signale auf die zweite Gerätebuchse C gegeben, da diese zu dem Bild- und Tonwiedergabegerät VREC, TV führt.

## Patentansprüche

1. Terminaladapter (TA-TV) zur Übertragung von Audio/Videosignalen über ein diensteintegrierendes Nachrichtennetz (ISDN), bestehend aus
- einer Netzbuchse (A) zum Anschluß eines diensteintegrierenden Nachrichtennetzes (ISDN) zum Empfang und zur Sendung der ISDN-Signale,
- einer ersten Gerätebuchse (B) zum Anschluß eines Bild- und Tonaufnahmegerätes (CAM) zum Empfang der Audio/Videosignale des Bild- und Tonaufnahmegerätes (CAM), und
- einer zweiten Gerätebuchse (C) zum Anschluß eines Bild- und Tonwiedergabegerätes (TV/VREC) zur Sendung der Audio/Videosignale zum Bild- und Tonwiedergabegerät (TV/VREC),
und
- einem sich zwischen der Netzbuchse (A) und den Gerätebuchsen (B,C) befindenden Konverter (1,2,3,4,5), mit einer ersten Seite, die an der Netzbuchse (A) angeschlossen ist, und mit einer zweiten Seite, die an den Gerätebuchsen (B,C) angeschlossen ist, zur Umwandlung der ISDN-Signale in Audio/Videosignale und vice versa, dadurch gekennzeichnet, daß der Konverter (1,2,3,4,5) besteht aus mindestens
- einem mit der Netzbuchse (A) gekoppelten ersten Modul (1) zum Zugriff auf das diensteintegrierende Nachrichtennetz (ISDN),
- einem daran angeschlossenen zweiten Modul (2) für ISDN-B-Kanal- und ISDN-D-Kanalprotokolle, zur Festlegung standardisierter Prozeduren,
- einem darauf zugreifenden und abgreifenden Bus (BUS),
- einem mit dem Bus (BUS) verbundenen Mittel (3) zur Verdichtung oder Kompression von zu übertragenden blockweisen Signaldaten,
- einem mit dem Mittel (3) und mit den Gerätebuchsen (B,C) verbundenen Videomodul (5) zur Verarbeitung der Videosignale, und
- einem mit dem Bus (BUS) und mit den Gerätebuchsen (B,C) verbundenen Audiomodul (4) zur Verarbeitung der Audiosignale.

2. Terminaladapter (TA-TV) nach Anspruch 1, dadurch gekennzeichnet, daß der Konverter (1,2,3,4,5,6) weiter besteht aus
- einem mit dem Bus (BUS) verbundenen optionalen Modul (6), mit welchem verschiedene Funktionen ausgeführt werden können.

3. Terminaladapter (TA-TV) nach Anspruch 1 oder 2, dadurch gekennzeichnet, daß der Konverter (1,2,3,4,5,7) weiter besteht aus
- einer mit dem Bus (BUS) verbundenen Mikroprozessoreinheit (7) mit Speicherbausteinen.

4. Vorrichtung zur Übertragung von Audio/Videosignalen über ein diensteintegrierendes Nachrichtennetz (ISDN), bestehend aus mindestens einem Bild- und Tonwiedergabegerät (TV/VREC) und aus mindestens einem Bild- und Tonaufnahmegerät (CAM) und aus einem Terminaladapter (TA-TV) bestehend aus mindestens
- einer Netzbuchse (A) zum Anschluß eines diensteintegrierenden Nachrichtennetzes (ISDN) zum Empfang und zur Sendung der ISDN-Signale,
- einer ersten Gerätebuchse (B) zum Anschluß eines Bild- und Tonaufnahmegerätes (CAM) zum Empfang der Audio/Videosignale des Bild- und Tonaufnahmegerätes (CAM), und
- einer zweiten Gerätebuchse (C) zum Anschluß eines Bild- und Tonwiedergabegerätes (TV/VREC) zur Sendung der Audio/Videosignale zum Bild- und Tonwiedergabegerät (TV/VREC), und
- einem sich zwischen der Netzbuchse (A) und den Gerätebuchsen (B,C) befindenden Konverter (1,2,3,4,5), mit einer ersten Seite, die an der Netzbuchse (A) angeschlossen ist, und mit einer zweiten Seite, die an den Gerätebuchsen (B,C) angeschlossen ist, zur Umwandlung der ISDN-Signale in Audio/Videosignale und vice versa, dadurch gekennzeichnet, daß der Konverter (1,2,3,4,5) besteht aus mindestens
- einem mit der Netzbuchse (A) gekoppelten ersten Modul (1) zum Zugriff auf das diensteintegrierende Nachrichtennetz (ISDN),
- einem daran angeschlossenen zweiten Modul (2) für ISDN-B-Kanal- und ISDN-D-Kanalprotokolle, zur Festlegung standardisierter Prozeduren,
- einem darauf zugreifenden und abgreifenden Bus (BUS),
- einem mit dem Bus (BUS) verbundenen Mittel (3) zur Verdichtung oder Kompression von zu übertragenden blockweisen Signaldaten,
- einem mit dem Mittel (3) und mit den Gerätebuchsen (B,C) verbundenen Videomodul (5) zur Verarbeitung der Videosignale, und
- einem mit dem Bus (BUS) und mit den Gerätebuchsen (B,C) verbundenen Audiomodul (4) zur Verarbeitung der Audiosignale.

5. Vorrichtung nach Anspruch 4, dadurch gekennzeichnet, daß der Konverter (1,2,3,4,5,6) weiter besteht aus
- einem mit dem Bus (BUS) verbundenen optionalen Modul (6), mit welchem verschiedene Funktionen ausgeführt werden können.

6. Vorrichtung nach Anspruch 4 oder 5, dadurch gekennzeichnet, daß der Konverter (1,2,3,4,5,7) weiter besteht aus
- einer mit dem Bus (BUS) verbundenen Mikroprozessoreinheit (7) mit Speicherbausteinen.

7. Vorrichtung nach Anspruch 4, 5 oder 6, dadurch gekennzeichnet, daß in den Terminaladapter (TA-TV) eine Tastatur eingebaut ist oder bei der auf den Terminaladapter (TA-TV) eine Fernbedienung wirkt, zur Durchführung einer Teilnehmerwahl.

8. Vorrichtung nach Anspruch 4, 5, 6 oder 7, dadurch gekennzeichnet, daß für den Fall, daß das Bild- und Tonwiedergabegerät (TV/VREC) mit einem SCART-Anschluß über eine Leitung mit dem Terminaladapter (TA-TV) verbunden ist und über eine Fernbedienung (IR) bedient werden kann, zur Teilnehmerwahl die Fernbedienung (IR) des Bild- und Tonwiedergabegerätes (TV/VREC) benutzt wird.

9. Vorrichtung nach Anspruch 4, 5, 6, 7 oder 8, dadurch gekennzeichnet, daß zusätzlich ein Datenverarbeitungsgerät über eine Schnittstelle (D) mit dem Terminaladapter (TA-TV) verbunden ist, und eine Teilnehmerwahl mittels einer Eingabe einer Teilnehmernummer in das Datenverarbeitungsgerät erfolgt oder bei der eine Teilnehmernummer mit dem Datenverarbeitungsgerät in den Terminaladapter (TA-TV) programmiert wird, oder bei der das Datenverarbeitungsgerät zur Ausführung von Rechenprozeduren mit Daten von Videosignalen zur Verfügung steht.

10. Vorrichtung nach Anspruch 4, 5, 6, 7, 8 oder 9, dadurch gekennzeichnet, daß eine Teilnehmerwahl über das diensteintegrierende Nachrichtennetz (ISDN) erfolgt, und in einem angewählten Terminaladapter (TA-TV), nach einer Zugangskontrolle mittels einer Abfrage eines Paßwortes, eine Teilnehmernummer abgesetzt werden kann.

## Claims

1. Terminal adapter (TA-TV) for transmitting audio/video signals via an integrated services communication network (ISDN), comprising
- a network socket (A) for connecting an integrated services communication network (ISDN) for receiving and for transmitting the ISDN signals,
- a first appliance socket (B) for connecting a picture and sound recording appliance (CAM) for receiving the audio/video signals of the picture and sound recording appliance (CAM), and
- a second appliance socket (C) for connecting a picture and sound playback appliance (TV/VREC) for transmitting the audio/video signals to the picture and sound playback appliance (TV/VREC),
and
- a converter (1, 2, 3, 4, 5) which is situated between the network socket (A) and the appliance sockets (B, C) and which has a first side connected to the network socket (A) and which has a second side connected to the appliance sockets (B, C), for converting the ISDN signals into audio/video signals and vice versa, characterized in that the converter (1, 2, 3, 4, 5) comprises at least
- a first module (1) coupled to the network socket (A) for accessing the integrated services communication network (ISDN),
- a second module (2), connected thereto, for ISDN B-channel and ISDN D-channel protocols for establishing standardized procedures,
- a bus (BUS) which accesses and taps the latter,
- a means (3) for compacting or compressing signal data to be transmitted block-by-block, which means is connected to the bus (BUS),
- a video module (5) for processing the video signals which is connected to the means (3) and to the appliance sockets (B, C), and
- an audio module (4) for processing the audio signals which is connected to the bus (BUS) and to the appliance sockets (B, C).

2. Terminal adapter (TA-TV) according to Claim 1, characterized in that the converter (1, 2, 3, 4, 5, 6) furthermore comprises
- an optional module (6) which is connected to the bus (BUS) and with which various functions can be performed.

3. Terminal adapter (TA-TV) according to Claim 1 or 2, characterized in that the converter (1, 2, 3, 4, 5, 7) furthermore comprises
- a microprocessor unit (7) which is connected to the bus (BUS) and which comprises memory units.

4. Device for transmitting audio/video signals via an integrated services communication network (ISDN), comprising at least one picture and sound playback appliance (TV/VREC) and at least one picture and sound recording appliance (CAM) and a terminal adapter (TA-TV) comprising at least
- a network socket (A) for connecting an integrated services communication network (ISDN) for receiving and for transmitting the ISDN signals,
- a first appliance socket (B) for connecting a picture and sound recording appliance (CAM) for receiving the audio/video signals of the picture and sound recording appliance (CAM), and
- a second appliance socket (C) for connecting a picture and sound playback appliance (TV/VREC) for transmitting the audio/video signals to the picture and sound playback appliance (TV/VREC), and
- a converter (1, 2, 3, 4, 5) which is situated between the network socket (A) and the appliance sockets (B, C) and which has a first side connected to the network socket (A) and which has a second side connected to the appliance sockets (B, C), for converting the ISDN signals into audio/video signals and vice versa, characterized in that the converter (1, 2, 3, 4, 5) comprises at least
- a first module (1) coupled to the network socket (A) for accessing the integrated services communication network (ISDN),
- a second module (2), connected thereto, for ISDN B-channel and ISDN D-channel protocols for establishing standardized procedures,
- a bus (BUS) which accesses and taps the latter,
- a means (3), connected to the bus (BUS), for compacting or compressing signal data to be transmitted block-by-block,
- a video module (5) for processing the video signals which is connected to the means (3) and to the appliance sockets (B, C), and
- an audio module (4) for processing the audio signals connected to the bus (BUS) and to the appliance sockets (B, C).

5. Device according to Claim 4, characterized in that the converter (1, 2, 3, 4, 5, 6) furthermore comprises
- an optional module (6) which is connected to the bus (BUS) and with which various functions can be performed.

6. Device according to Claim 4 or 5, characterized in that the converter (1, 2, 3, 4, 5, 7) furthermore comprises
- a microprocessor unit (7) which is connected to the bus (BUS) and which comprises memory units.

7. Device according to Claim 4, 5 or 6, characterized in that a keyboard is built into the terminal adapter (TA-TV) or a remote control acts on the terminal adapter (TA-TV) to carry out a subscriber dialling.

8. Device according to Claim 4, 5, 6 or 7, characterized in that in the case where the picture and sound playback appliance (TV/VREC) is connected to the terminal adapter (TA-TV) via a line by a SCART connection and can be operated by means of a remote control (IR), the remote control (IR) of the picture and sound playback appliance (TV/VREC) is used for subscriber dialling.

9. Device according to Claim 4, 5, 6, 7 or 8, characterized in that a data processor is additionally connected to the terminal adapter (TA-TV) via an interface (D), and subscriber dialling takes place by means of entering a subscriber number in the data processor or a subscriber number is programmed into the terminal adapter (TA-TV) by the data processor or the data processor is available for performing computational procedures with video signal data.

10. Device according to Claim 4, 5, 6, 7, 8 or 9, characterized in that subscriber dialling takes place via the integrated services communication network (ISDN) and a subscriber number can be transmitted in a selected terminal adapter (TA-TV) after an access control by means of demanding a password.

## Revendications

1. Adaptateur de terminal (TA-TV) pour transmettre des signaux audio et vidéo à travers un réseau de communication à intégration de services (ISDN), comprenant
- une prise secteur (A) pour le raccordement d'un réseau de communication à intégration de services (ISDN) pour recevoir et émettre des signaux RNIS,
- une première prise de périphérique (B) pour le raccordement d'un appareil d'enregistrement d'images et de son (CAM) pour recevoir les signaux audio et vidéo de l'appareil d'enregistrement d'images et de son (CAM), et
- une deuxième prise de périphérique (C) pour le raccordement d'un appareil de restitution d'images et de son (TV/VREC) pour émettre les signaux audio et vidéo à destination de l'appareil de restitution d'images et de son (TV/VREC),
et
- un convertisseur (1, 2, 3, 4, 5) situé entre la prise secteur (A) et les prises de périphérique (B, C), avec un premier côté qui est raccordé à la prise secteur (A), et avec un deuxième côté qui est raccordé aux prises de périphérique (B, C), pour convertir les signaux RNIS en signaux audio et vidéo et vice versa, caractérisé en ce que le convertisseur (1, 2, 3, 4, 5) comprend au moins
- un premier module (1) couplé avec la prise secteur (A) pour accéder au réseau de communication à intégration de services (ISDN),
- un deuxième module (2) qui y est raccordé pour les protocoles de canal B RNIS et de canal D RNIS, pour fixer des procédures standardisées,
- un bus (BUS) d'accès à, et de prélèvement de celui-ci,
- des moyens (3) connectés au bus (BUS) pour le compactage ou la compression de données de signal par blocs à transmettre,
- un module vidéo (5) connecté aux moyens (3) et aux prises de périphérique (B, C) pour traiter les signaux vidéo, et
- un module audio (4) connecté au bus (BUS) et aux prises de périphérique (B, C) pour traiter les signaux audio.

2. Adaptateur de terminal (TA-TV) selon la revendication 1, caractérisé en ce que le convertisseur (1, 2, 3, 4, 5, 6) comprend en outre
- un module (6) optionnel connecté au bus (BUS) avec lequel différentes fonctions peuvent être exécutées.

3. Adaptateur de terminal (TA-TV) selon la revendication 1 ou 2, caractérisé en ce que le convertisseur (1, 2, 3, 4, 5, 7) comprend en outre
- une unité de microprocesseur (7) connecté au bus (BUS) avec des modules de mémoire.

4. Dispositif pour transmettre des signaux audio et vidéo à travers un réseau de communication à intégration de services (ISDN), comprenant au moins un appareil de restitution d'images et de son (TV/VREC) et au moins un appareil d'enregistrement d'images et de son (CAM) et un adaptateur de terminal (TA-TV) comprenant au moins
- une prise secteur (A) pour le raccordement d'un réseau de communication à intégration de services (ISDN) pour recevoir et émettre des signaux RNIS,
- une première prise de périphérique (B) pour le raccordement d'un appareil d'enregistrement d'images et de son (CAM) pour recevoir les signaux audio et vidéo de l'appareil d'enregistrement d'images et de son (CAM), et
- une deuxième prise de périphérique (C) pour le raccordement d'un appareil de restitution d'images et de son (TV/VREC) pour émettre les signaux audio et vidéo à destination de l'appareil de restitution d'images et de son (TV/VREC),
et
- un convertisseur (1, 2, 3, 4, 5) situé entre la prise secteur (A) et les prises de périphérique (B, C), avec un premier côté qui est raccordé à la prise secteur (A), et avec un deuxième côté qui est raccordé aux prises de périphérique (B, C), pour convertir les signaux RNIS en signaux audio et vidéo et vice versa, caractérisé en ce que le convertisseur (1, 2, 3, 4, 5) comprend au moins
- un premier module (1) couplé avec la prise secteur (A) pour accéder au réseau de communication à intégration de services (ISDN),
- un deuxième module (2) qui y est raccordé pour les protocoles de canal B RNIS et de canal D RNIS, pour fixer des procédures standardisées,
- un bus (BUS) d'accès à, et de prélèvement de celui-ci,
- des moyens (3) connectés au bus (BUS) pour le compactage ou la compression de données de signal par blocs à transmettre,
- un module vidéo (5) connecté aux moyens (3) et aux prises de périphérique (B, C) pour traiter les signaux vidéo, et
- un module audio (4) connecté au bus (BUS) et aux prises de périphérique (B, C) pour traiter les signaux audio.

5. Dispositif selon la revendication 4, caractérisé en ce que le convertisseur (1, 2, 3, 4, 5, 6) comprend en outre
- un module optionnel (6) connecté au bus (BUS) avec lequel différentes fonctions peuvent être exécutées.

6. Dispositif selon la revendication 4 ou 5, caractérisé en ce que le convertisseur (1, 2, 3, 4, 5, 7) comprend en outre
- une unité de microprocesseur (7) connectée au bus (BUS) avec des modules de mémoire.

7. Dispositif selon la revendication 4, 5 ou 6, caractérisé en ce qu'un clavier est intégré dans l'adaptateur de terminal (TA-TV) ou en ce qu'une télécommande agit sur l'adaptateur de terminal (TA-TV), pour exécuter une numérotation directe.

8. Dispositif selon la revendication 4, 5, 6 ou 7, caractérisé en ce que pour le cas où l'appareil de restitution d'images et de son (TV/VREC) serait connecté par un raccord SCART par l'intermédiaire d'une ligne avec l'adaptateur de terminal (TA-TV) et pourrait être commandé par l'intermédiaire d'une télécommande (IR), la télécommande (IR) de l'appareil de restitution d'images et de son (TV/VREC) est utilisée pour la numérotation directe.

9. Dispositif selon la revendication 4, 5, 6, 7 ou 8, caractérisé en ce que de plus, un appareil de traitement de données est connecté par une interface (D) à l'adaptateur de terminal (TA-TV) et en ce qu'une numérotation directe est effectuée en saisissant un numéro d'abonné dans l'appareil de traitement de données ou dans lequel un numéro d'abonné est programmé avec l'appareil de traitement de données dans l'adaptateur de terminal (TA-TV), ou dans lequel l'appareil de traitement de données est disponible pour l'exécution de procédures de calcul avec des données provenant de signaux vidéo.

10. Dispositif selon la revendication 4, 5, 6, 7, 8 ou 9, caractérisé en ce qu'une numérotation directe est effectuée par l'intermédiaire du réseau de communication à intégration de services (ISDN) et en ce qu'un numéro d'abonné peut être transmis dans un adaptateur de terminal appelé (TA-TV) après un contrôle d'accès au moyen d'une demande de mot de passe.
